# EUROPEAN PATENT SPECIFICATION

(11) **EP 4 398 270 B1**
(45) Date of publication and mention of the grant of the patent: **17.06.2026**
(21) Application number: 22863580.1
(22) Date of filing: 01.09.2022
(51) Int. Cl.: H01B 7/42, B60L 53/18, B60L 53/14, B60L 53/16, B60L 53/302, H01B 1/02, F28F 13/12

(54) **ELECTRIC ENERGY TRANSMISSION SYSTEM FOR VEHICLE, AND CHARGING APPARATUS AND ELECTRIC VEHICLE**
ELEKTRISCHES ENERGIEÜBERTRAGUNGSSYSTEM FÜR EIN FAHRZEUG SOWIE LADEVORRICHTUNG UND ELEKTROFAHRZEUG
SYSTÈME DE TRANSMISSION D'ÉNERGIE ÉLECTRIQUE POUR VÉHICULE, ET APPAREIL DE CHARGE ET VÉHICULE ÉLECTRIQUE

(30) Priority: 02.09.2021 CN 202111028873
(43) Date of publication of application: 10.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/116514
(87) International publication number: WO 2023/030445

(56) References cited:
- EP-A1- 2 937 660
- EP-A1- 3 869 622
- WO-A1-2018/179866
- WO-A1-2021/091216
- CN-A- 1 329 377
- CN-A- 107 342 510
- CN-A- 107 342 510
- CN-A- 113 602 111
- CN-A- 113 922 124
- CN-A- 113 922 138
- CN-U- 213 583 228
- CN-U- 213 583 228
- CN-U- 213 988 399
- CN-U- 215 944 316
- US-A1- 2019 199 075
- US-A1- 2020 282 851
- US-A1- 2020 303 093
- ANONYMOUS: "Cupal washers from 8.99 EUR/packaging : FOR-EL", 4 August 2020 (2020-08-04), pages 1 - 3, XP093224481, Retrieved from the Internet <URL:https://web.archive.org/web/20200804110419/https://www.for-el.com/1501/> [retrieved on 20241114]

## Description

### RELATED APPLICATION

The present disclosure claims priority to Chinese Invention Patent Application No. 202111028873.X, filed on September 02, 2021, and entitled "Electric Energy Transmission System for Vehicle, Charging Apparatus and Electric Vehicle".

### TECHNICAL FIELD

The present disclosure relates to the technical field of electric energy transmission, in particular to an electric energy transmission system for a vehicle, a charging apparatus, and an electric vehicle.

### BACKGROUND

With the development of the new energy field and the improvement of environmental protection requirements, electric vehicles are developing rapidly. The power source of electric vehicles is mainly batteries, and the system for energy storage and charging of the batteries that are run out of power is an important part of the electric vehicles. A charging system mainly includes a charging socket, an electric wire and a connector. The electric wire of the current charging system is mainly a copper wire harness, and the connection scheme of the electric wire is as follows: two ends of the electric wire are connected to a terminal, and then the two ends are connected to the charging socket and the connector respectively, and then a male end and a female end of the connector are matched, so as to charge the battery. With the development of new energy vehicles, full charging in shortest time is the main demand of customers. In order to meet such quick charging, the input current needs to be increased, which requires an increase in the wire diameter of the copper wire harness of an electric energy transmission system, resulting in an increase in the size of the copper wire harness and a significant increase in the cost and weight of the copper wire harness.

When large current passes through the electric energy transmission system, it may cause electromagnetic interference to other components. In order to avoid such electromagnetic interference, it is necessary to add a shielding layer on the outer side of the electric energy transmission system, and such shielded high-voltage wire harness leads to a significant increase in cost and weight of the electric energy transmission system.

At present, in the charging process of electric vehicles, the large current leads to high heat generation of the electric energy transmission system. In order to reduce the heat of the high-voltage wire harness, the usual way is to increase the wire diameter to reduce the wire resistance and reduce the heat generation. However, this way significantly increases the cost and weight of the high-voltage wire harness. A wire harness unit, power storage device unit, and wire harness are known from the prior art, for example from US2019/199075A1. A wire harness, and power storage device unit are known from the prior art, for example from WO2018/179866A1.

Therefore, in the technical field of electric energy transmission, there is an urgent need for an electric energy transmission system with excellent conductive property, light weight, low cost, anti-electromagnetic interference, simple structure and convenient assembly.

### SUMMARY

The present invention is defined by the independent claims. Further embodiments are set forth in the dependent claims. Any references to inventions or embodiments not falling within the scope of the independent claims are to be interpreted as examples useful for understanding the invention. In order to reduce the cost of the electric energy transmission system, the present disclosure provides an electric energy transmission system for a vehicle, a charging apparatus and an electric vehicle. The electric energy transmission system for a vehicle has the advantages of excellent conductive property, light weight, low cost and good shielding effect, can effectively reduce the temperature of the electric energy transmission system, and is simple in structure and convenient in assembly, in the process of large current charging.

The invention solves its technical problem by adopting the technical solution as below.

An electric energy transmission system for a vehicle, including an electric energy transmission guide rail and a charging connection part that is connected to an external charging system, with one end of the electric energy transmission guide rail being connected to one end of the charging connection part.

A charging device including an electric energy transmission system for a vehicle described above, with the charging connection part being a charging plug or a charging socket.

An electric vehicle including an electric energy transmission system for a vehicle described above, with the charging connection part being a charging plug or a charging socket.

The advantageous effects of the present invention are as follows.
1. In the electric energy transmission system for a vehicle, the wire of the electric energy transmission guide rail is made of a material containing aluminum, which can not only reduce the cost and weight, but also has good conductive property to meet the requirements of large current charging.
2. In the electric energy transmission system for a vehicle, the electric energy transmission guide rails are stacked at appropriate spacing, which can effectively reduce the electromagnetic interference to other components when the electric energy transmission system bundle is powered on, so that the shielding layer structure of the electric energy transmission system can be eliminated to reduce the cost and weight.
3. In the electric energy transmission system for a vehicle, the electric energy transmission guide rail is provided with a heat dissipation structure, which can effectively reduce the heat generation when the electric energy transmission system is powered on, and achieve a good cooling effect. In addition, a temperature sensor is further provided in the connection area, which can monitor the temperature of the electric energy transmission system at any time.
4. In the electric energy transmission system for a vehicle, an electric energy transit layer and/or a deposited metal layer is provided in the connection area of the electric energy transmission system, so as to improve the corrosion resistance of the connection area, thereby prolonging the service life of the electric energy transmission system.

### BRIEF DESCRIPTION OF DRAWINGS

The drawings that constitute a part of the present application provide a further understanding of the present disclosure, and the schematic embodiments of the present disclosure and the description thereof are intended to explain the present disclosure and do not limit the scope of the present disclosure.
FIG. 1 is a schematic diagram of an electric energy transmission system for a vehicle according to the present disclosure.
FIG. 2 is a schematic diagram of a Z-direction bending section.
FIG. 3 is a schematic diagram of an XY-direction bending section.
FIG. 4 is a schematic diagram of a helical portion of an electric energy transmission guide rail.
FIG. 5 is an exploded schematic diagram of a connection area and an electric energy transit layer.
FIG. 6 is a schematic diagram of a connection area and an electric energy transit layer that are connected to each other.
FIG. 7 is a schematic diagram of a connection area, an electric energy transit layer and a transition connection ring.
FIG. 8 is a schematic diagram showing that two electric energy transmission guide rails are respectively a DC positive electric energy transmission system and a DC negative electric energy transmission system.
FIG. 9 is a plane schematic diagram of an induced magnetic field generated by the DC positive electric energy transmission system and the DC negative electric energy transmission system.
FIG. 10 is a stereoscopic schematic diagram of an induced magnetic field generated by the DC positive electric energy transmission system and the DC negative electric energy transmission system.
FIG. 11 is a schematic diagram showing a distance between the DC positive electric energy transmission system and the DC negative electric energy transmission system.
FIG. 12 is a schematic diagram of an end of an insulator.
FIG. 13 is a cross-section schematic diagram of an electric energy transmission system for a vehicle according to the present disclosure.
FIG. 14 is a schematic diagram of a support structure.
FIG. 15 is a cross-section schematic diagram showing that a liquid-cooled heat dissipation channel is located within an electric energy transmission body - this embodiment is not falling into the scope of appended claims.
FIG. 16 is an external schematic diagram showing that a liquid-cooled heat dissipation channel is located within an electric energy transmission body - this embodiment is not falling into the scope of appended claims.
FIG. 17 is a cross-section schematic diagram showing that a liquid-cooled heat dissipation channel is located between the electric energy transmission body and the insulator - this embodiment is not falling into the scope of appended claims.
FIG. 18 is an external schematic diagram showing that a liquid-cooled heat dissipation channel is located between the electric energy transmission body and the insulator - this embodiment is not falling into the scope of appended claims.

1. charging connection part; 2. electric energy transmission guide rail; 3. circulating water pump; 4. temperature sensor; 202. DC electric energy transmission system; 203. helical portion; 204. helix pitch; 205. Z-direction bending section; 206. XY-direction bending section; 207. connection area; 208. first connection through hole; 209. electric energy transit layer; 210. second connection through hole; 211. transition connection ring; 212. electric energy transmission body; 213. insulator; 214. air-cooled heat dissipation channel; 215. support structure; 216. support bar or support block; 217. circumferential channel; 218. axial channel; 220. DC positive electric energy transmission system; 221. DC negative electric energy transmission system; 222. induced magnetic field.

### DETAILED DESCRIPTION OF EMBODIMENTS

It should be noted that the embodiments in the present application and the features in the embodiments can be combined with each other unless they are in conflict. The present disclosure will now be described in detail below with reference to the accompanying drawings and in conjunction with the embodiments.

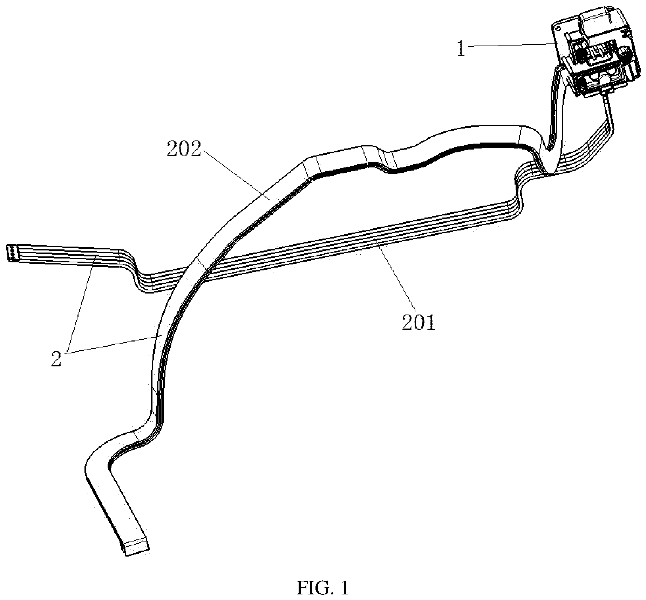

An electric energy transmission system for a vehicle, including a charging connection part 1 and an electric energy transmission guide rail 2. The charging connection part 1 is used to be connected to an external charging system, and one end of the electric energy transmission guide rail 2 is connected to the charging connection part 1, as shown in FIG. 1.

As shown in FIGs. 1 to 18, in the electric energy transmission system for a vehicle, the electric energy transmission guide rail is used as a wire, which has excellent conductive property, light weight, low cost, and is simple in structure and convenient in assembly, in the process of large current charging. The electric energy transmission system for a vehicle can be used not only in the interior of the vehicle, but also in a charging gun outside the vehicle.

The number of the electric energy transmission guide rail 2 may be determined as required, for example, one or more. The electric energy transmission guide rail 2 is a DC electric energy transmission system 202.

In this embodiment, the electric energy transmission guide rail 2 includes a flat strip-shaped electric energy transmission body 212 that is made of a material containing or being one or more selected from the group consisting of aluminum, phosphorus, tin, copper, iron, manganese, chromium, titanium and lithium.

Exemplarily, the material of the electric energy transmission body 212 contains or is aluminum.

Exemplarily, the electric energy transmission guide rail 2 is a high-voltage aluminum busbar, that is, the electric energy transmission body 212 is made of aluminum, in this case, the electric energy transmission guide rail 2 is a charging aluminum busbar. The aluminum busbar has excellent conductive property and has a density that is one third of the density of copper, and is not only lighter in weight than the copper wire harness, but also lower in cost than copper.

In this embodiment, the electric energy transmission guide rail 2 also has the advantage of being conveniently bend-formed. That is, the electric energy transmission guide rail 2 can maintain a bended shape after being bent, in this way, the electric energy transmission guide rail 2 can be arranged to adapt to the vehicle body sheet metal, and can be bend-formed at different positions as needed, so as to save space, facilitate being fixed, and avoid being entangled with other cables.

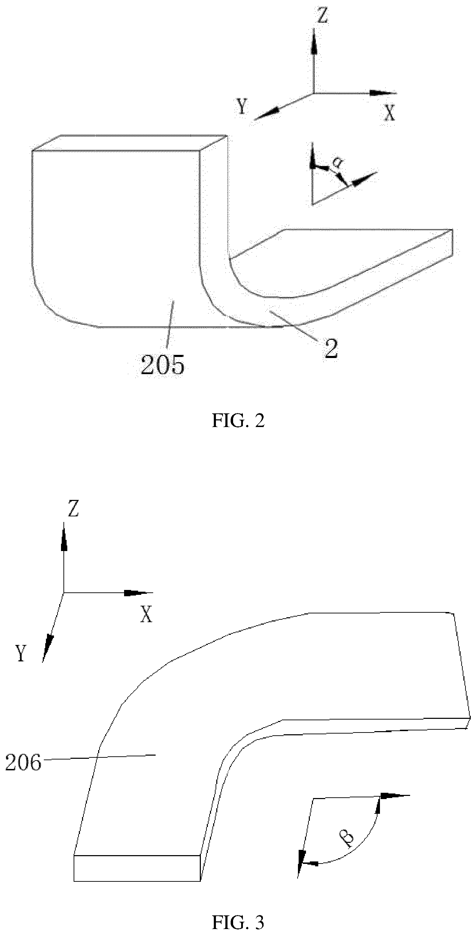

Specifically, in a space rectangular coordinate system with X, Y, and Z axes as coordinate axes, the electric energy transmission guide rail 2 includes a Z-direction bending section 205 and/or an XY-direction bending section 206, as shown in FIGs. 2 and 3. A bending angle α of the Z-direction bending section 205 is 0° to 180°, and a bending angle β of the XY-direction bending section 206 is 0° to 180°.

The electric energy transmission guide rail 2 has good bending performance, and its bending portion can maintain a certain arc, and/or it can be bent continuously, can also be attached to vehicle-body parts. For the bending situation, the bending part can be formed by extrusion, fixed module winding, or twisting, etc., and a small range of rebound without affecting the assembly effect of the motor vehicle is allowed after the bending part is formed.

The electric energy transmission guide rail 2 is not limited to being bent in the same direction, and the electric energy transmission guide rail 2 can be continuously bent in the XY direction and the Z direction to obtain an electric energy transmission guide rail 2 with specific shape.

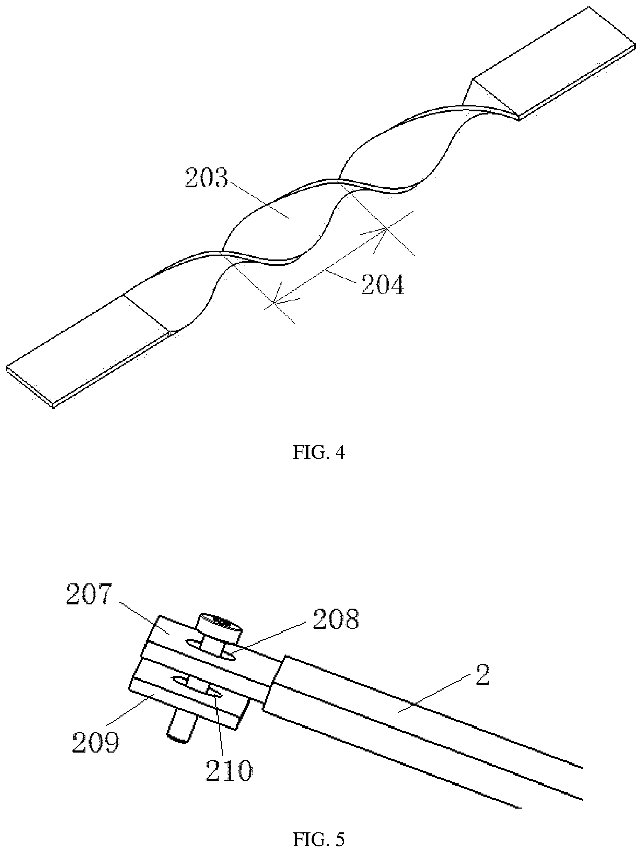

In the embodiment, the electric energy transmission guide rail 2 includes at least one helical portion 203 of which a helix pitch 204 is greater than 8 mm, as shown in FIG. 4.

In order to verify the influence of the helix pitch 204 of the helical portion 203 on pull strength of the electric energy transmission guide rail 2, the inventor prepares samples of the electric energy transmission guide rail 2 with the same specification, with the same number of helical portions 203 but with different helix pitches, and tests the pull strength of the samples of the electric energy transmission guide rail 2. The test results are shown in Table 1.

The pull strength of the electric energy transmission guide rail 2 is tested by using a universal tension testing machine to fix the two ends of the sample of the electric energy transmission guide rail 2 having the helical portion 203 on a tensile fixture of the universal tension testing machine, and to stretch the sample at a speed of 50 mm/min. The broken position of the sample as well as the pull force value when the sample is pulled broken are recorded. In this embodiment, the pull force value greater than 1600 N is a qualified value.

**Table 1: Influence of different helix pitches on pull strength and broken position of the electric energy transmission guide ray 2**

| Different helix pitches of the electric energy transmission guide rail (unit: mm) | | | | | | | | | |
|---|---|---|---|---|---|---|---|---|---|
| 1 | 3 | 5 | 8 | 20 | 50 | 80 | 100 | 200 | 300 |

| Pull force value when the electric energy transmission guide rail is pulled broken (unit: N) | | | | | | | | | |
|---|---|---|---|---|---|---|---|---|---|
| 1476 | 1508 | 1587 | 1623 | 1694 | 1763 | 1827 | 1886 | 1935 | 1994 |

| Whether the broken position is at the helical portion | | | | | | | | | |
|---|---|---|---|---|---|---|---|---|---|
| YES | YES | YES | NO | NO | NO | NO | NO | NO | NO |

As can be seen from Table 1 above, when the helix pitch of the helical portion is less than 8 mm, since the helix pitch is small, the electric energy transmission guide rail 2 needs to undergo a larger size of twisting, resulting in the internal stress concentration of the electric energy transmission guide rail 2. As a result, when being subjected to an external force, the electric energy transmission guide rail 2 is first broken at the helical portion, and the pull force value when the electric energy transmission guide rail 2 is broken is less than the qualified value. In this case, the electric energy transmission guide rail 2 has low strength, and is prone to break during use, which will result in a function failure of the electric energy transmission guide rail 2, and in serious cases, will lead to short circuit and cause combustion accidents. When the helix pitch of the helical portion is greater than 8 mm, the electric energy transmission guide rail 2 can be twisted smoothly, and the stress of the helical portion is uniform. Therefore, when the electric energy transmission guide rail 2 breaks, the broken position is not concentrated at the helical portion, and the pull force value is greater than the qualified value, so that the mechanical and electrical properties of the electric energy transmission guide rail 2 can be guaranteed. Therefore, the inventor sets the helix pitch of the helical portion to be greater than 8 mm.

In this embodiment, the tensile strength of the electric energy transmission body 212 is 30 MPa to 230 MPa. Exemplarily, the tensile strength of the electric energy transmission body 212 is 40 MPa to 170 MPa.

In order to verify the influence of the tensile strength of the electric energy transmission body 212 on the pull force by which the electric energy transmission body 212 is pulled broken and on the torque by which the electric energy transmission body 212 is bent in the XY direction, the inventor selects samples of the electric energy transmission body 212 with the same size specification and with different tensile strengths, and tests the pull strength and bending torque of the samples of the electric energy transmission body 212. The test results are shown in Table 2.

The pull strength of the electric energy transmission body 212 is tested by using a universal tension testing machine to fix the two ends of the sample of the electric energy transmission body on a tensile fixture of the universal tension testing machine, and to stretch the sample at a speed of 50 mm/min. The pull force value when the sample is pulled broken is recorded. In this embodiment, the pull force value greater than 1600 N is a qualified value.

The torque of the electric energy transmission body 212 is tested by bending the electric energy transmission body 212 by 90° with the same bending radius and at the same bending speed, and using a torque tester to test the torque value by which the electric energy transmission body 212 is deformed during the bending process of the electric energy transmission body 212. In this embodiment, the torque value less than 30 N•m is a qualified value.

**Table 2: Influence of different tensile strengths on pull strength of the electric energy transmission body 212**

| Different tensile strengths of the electric energy transmission body (unit: MPa) | | | | | | | | | | | |
|---|---|---|---|---|---|---|---|---|---|---|---|
| 10 | 20 | 30 | 40 | 50 | 100 | 150 | 170 | 200 | 230 | 250 | 270 |

| Pull force value when the electric energy transmission body is pulled broken (unit: N) | | | | | | | | | | | |
|---|---|---|---|---|---|---|---|---|---|---|---|
| 1518 | 1587 | 1693 | 1718 | 1769 | 1815 | 1856 | 1909 | 1942 | 1985 | 2027 | 2094 |

| Torque value of bending in the XY direction (unit: N•m) | | | | | | | | | | | |
|---|---|---|---|---|---|---|---|---|---|---|---|
| 6 | 7 | 8 | 10 | 13 | 15 | 17 | 19 | 25 | 29 | 34 | 38 |

As can be seen from Table 2 above, when the tensile strength of the electric energy transmission body 212 is less than 30 MPa, the pull force value when the electric energy transmission body 212 is pulled broken is less than the qualified value. In this case, the electric energy transmission body 212 itself has a low strength, so that it is prone to break when subjected to a small external force, which will result in a function failure of the electric energy transmission body 212 and a failure to realize electric energy transmission. When the tensile strength of the electric energy transmission body 212 is greater than 230 MPa, since the electric energy transmission body 212 itself has a high strength, the pull force value when the electric energy transmission body 212 is pulled broken can meet the qualified value range, however, when the electric energy transmission body 212 needs to be bent, a greater torque is required to deform the electric energy transmission body 212, and the torque value does not meet the requirements of the qualified value. Therefore, the inventor sets the tensile strength of the electric energy transmission body 212 to be 30 MPa to 230 MPa.

As can be seen from the data in Table 2, when the tensile strength of the electric energy transmission body 212 is 40 MPa to 170 MPa, the pull force value when the electric energy transmission body is pulled broken and the torque when the electric energy transmission body is bent in the XY direction are both within a good range. Therefore, the inventor prefers the tensile strength of the electric energy transmission body 212 to be 40 MPa to 170 MPa.

In this embodiment, the elongation at break of the electric energy transmission body 212 is 2% to 60%.

In order to verify the elongation at break of the electric energy transmission body 212 on the breakage and conductivity of the electric energy transmission body 212 when it is stretched by a certain distance, the inventor selects samples of the electric energy transmission body 212 with the same size specification and with different elongations at break and tests the breakage and conductivity of the electric energy transmission body 212 when it is stretched by a certain distance. The test results are shown in Table 3.

The breakage of the electric energy transmission body 212 is tested by using a universal tension testing machine to fix the two ends of the sample of the electric energy transmission body 212 on a tensile fixture of the universal tension testing machine, to stretch the sample at a speed of 50 mm/min by the same distance, and to observe the breakage of the electric energy transmission body 212. In this embodiment, the stretching distance is generally a distance that the electric energy transmission body 212 elongates when being pulled under working conditions. If the electric energy transmission body 212 is broken, it is considered to be unqualified.

The electric conductivity of the electric energy transmission body 212 is tested by applying the same voltage at the fixed positions at both ends of the electric energy transmission body 212, and using a multimeter to measure the current of the electric energy transmission body 212 before it is stretched and the current of the electric energy transmission body 212 after it is stretched by a certain length, and calculating a percentage of the current after the stretching and the current before the stretching. In this embodiment, the electric conductivity greater than 95% is considered to be qualified.

**Table 3: Elongation at break of the electric energy transmission body 212 on the breakage and conductivity thereof**

| Different elongations at break of the electric energy transmission body (%) | | | | | | | | | | | |
|---|---|---|---|---|---|---|---|---|---|---|---|
| 0.5 | 1 | 2 | 5 | 10 | 20 | 30 | 40 | 50 | 60 | 70 | 80 |

| Breakage of the electric energy transmission body | | | | | | | | | | | |
|---|---|---|---|---|---|---|---|---|---|---|---|
| Breaka ge | Breaka ge | Not broken | Not broken | Not broken | Not broken | Not broken | Not broken | Not broken | Not broken | Not broken | Not broken |

| Electric conductivity of the electric energy transmission body (%) | | | | | | | | | | | |
|---|---|---|---|---|---|---|---|---|---|---|---|
| 0 | 0 | 98.8 | 98.3 | 97.6 | 97.2 | 96.7 | 96.1 | 95.6 | 95.2 | 94.7 | 94.5 |

As can be seen from Table 3 above, when the elongation at break of the electric energy transmission body 212 is less than 2%, the electric energy transmission body 212 has a relatively large rigidity, and it is broken when being stretched by a certain distance, which will result in a function failure of the electric energy transmission body 212 and a failure to realize electric energy transmission, and in serious cases, will lead to short circuit and cause combustion accidents. When the elongation at break of the electric energy transmission body 212 is greater than 60%, although the electric energy transmission body 212 is not pulled broken, the electric energy transmission body 212 is easy to be stretched to have a smaller cross-sectional area since it is relatively soft, resulting in the conductivity of the electric energy transmission body 212 failing to meet the requirements of the qualified value. Therefore, the inventor sets the elongation at break of the electric energy transmission body 212 to be 2% to 60%.

In this embodiment, a hardness of the electric energy transmission body 212 is 8 HV to 105 HV. Exemplarily, the hardness of the electric energy transmission body 212 is 10 HV to 55 HV.

In order to verify the influence of the hardness of the electric energy transmission body 212 on the force by which the electric energy transit layer 209 is peeled from the electric energy transmission body 212 and the torque by which the he electric energy transmission body 212 is bent in the XY direction, the inventor selects samples of the electric energy transmission body 212 with the same size specification and with different hardnesses, and tests the peeling force of the electric energy transit layer 209 and the bending torque of the electric energy transmission body 212. The test results are shown in Table 4.

The peeling force of the electric energy transit layer 209 is tested by using a universal tension testing machine to fix the electric energy transit layer 209 and the electric energy transmission body 212 on which the electric energy transit layer 209 is weld respectively on a tensile fixture of the universal tension testing machine, and to stretch the sample at a speed of 50 mm/min by the same distance. The pull force value when the electric energy transit layer 209 is peeled from the electric energy transmission body 212 is recorded.

The torque of the electric energy transmission body 212 is tested by bending the electric energy transmission body 212 by 90° with the same bending radius and at the same bending speed, and using a torque tester to test the torque value by which the electric energy transmission body 212 is deformed during the bending process of the electric energy transmission body 212. In this embodiment, the torque value less than 30 N•m is a qualified value.

**Table 4: Influence of hardness of the electric energy transmission body 212 on the peeling force and bending torque of the electric energy transit layer**

| Different hardnesses of the electric energy transmission body (unit: HV) | | | | | | | | | | | |
|---|---|---|---|---|---|---|---|---|---|---|---|
| 3 | 5 | 8 | 10 | 15 | 35 | 55 | 65 | 85 | 105 | 110 | 115 |

| Peeling force of the electric energy transit layer (unit: N) | | | | | | | | | | | |
|---|---|---|---|---|---|---|---|---|---|---|---|
| 864 | 882 | 908 | 932 | 948 | 954 | 968 | 974 | 983 | 995 | 1008 | 1016 |

| Torque value of bending in the XY direction (unit: N•m) | | | | | | | | | | | |
|---|---|---|---|---|---|---|---|---|---|---|---|
| 20.8 | 21.6 | 22.7 | 23.5 | 24.3 | 25.2 | 25.9 | 27.0 | 28.1 | 29.2 | 30.4 | 30.7 |

As can be seen from Table 4 above, when the hardness of the electric energy transmission body 212 is less than 8HV, the tension value when the electric energy transit layer 209 is peeled from the electric energy transmission body 212 is less than the qualified value, and the electric energy transit layer 209 welded on the electric energy transmission body 212 is easily peeled from the electric energy transmission body 212 by an external force, resulting in a failure of the electric energy transit layer 209 to protect the electric energy transmission body 212 and a function failure of the electric energy transmission body 212, thus failing to realize electric energy transmission, and in serious cases, leading to short circuit and causing combustion accidents. When the hardness of the electric energy transmission body 212 is greater than 105 HV, since the electric energy transmission body 212 itself has a high hardness, when the electric energy transmission body 212 needs to be bent, a greater torque is required to deform the electric energy transmission body 212, and the torque value does not meet the requirements of the qualified value. Therefore, the inventor sets the hardness of the electric energy transmission body 212 to be 8 HV to 105 HV.

As can be seen from the data in Table 4, when the hardness of the electric energy transmission body 212 is 10 HV to 55 HV, the pull force value when the electric energy transit layer 209 is peeled from the electric energy transmission body 212 and the torque when the electric energy transmission body 212 is bent in the XY direction are both within a good range. Therefore, the inventor prefers that the hardness of the electric energy transmission body 212 to be 10 HV to 55 HV.

In this embodiment, a grain size of the electric energy transmission body 212 is 5 µm to 200 µm.

In order to verify the influence of the grain size of the electric energy transmission body 212 on the pull strength and preparation energy of the electric energy transmission body 212, the inventor selects samples of the electric energy transmission body 212 with the same size specification and with different grain sizes and tests the pull strength and the energy consumed during preparation of the electric energy transmission body 212. The test results are shown in Table 5.

The pull strength of the electric energy transmission body 212 is tested by using a universal tension testing machine to fix the two ends of the sample of the electric energy transmission body 212 on a tensile fixture of the universal tension testing machine, and to stretch the sample at a speed of 50 mm/min. The pull force value when the sample is pulled broke is recorded. In this embodiment, the pull force value greater than 1600 N is a qualified value.

The energy consumed during preparation of the electric energy transmission body 212 is tested by the following method: performing a heat treatment on the electric energy transmission bodies 212 to obtain the electric energy transmission bodies 212 with different grain sizes, and calculating the energy consumed by the electric energy transmission bodies 212 with different grain sizes. In this embodiment, the consumed energy value less than 30 KW/H is a qualified value.

**Table 5: Influence of grain size of the electric energy transmission body 212 on the pull strength and the energy consumed during preparation**

| Different grain sizes of the electric energy transmission body (unit: µm) | | | | | | | | | | | |
|---|---|---|---|---|---|---|---|---|---|---|---|
| 1 | 3 | 5 | 10 | 40 | 70 | 100 | 140 | 170 | 200 | 220 | 240 |

| Pull force value when the electric energy transmission body is pulled broken (unit: N) | | | | | | | | | | | |
|---|---|---|---|---|---|---|---|---|---|---|---|
| 2036 | 1987 | 1945 | 1894 | 1826 | 1784 | 1730 | 1688 | 1642 | 1608 | 1528 | 1467 |

| Energy consumed during preparation (unit: KW/H) | | | | | | | | | | | |
|---|---|---|---|---|---|---|---|---|---|---|---|
| 30.7 | 30.4 | 29.6 | 29.1 | 28.7 | 28.4 | 28.1 | 27.6 | 27.1 | 26.6 | 26.0 | 25.5 |

As can be seen from Table 5 above, when the grain size of the electric energy transmission body 212 is less than 5 µm, the energy consumed during the preparation of the electric energy transmission body 212 does not meet the requirements of the qualified value. The smaller the grain size is, the higher the energy consumed during the preparation is, and the higher the cost of the electric energy transmission body 212 is, but the corresponding performance is not increased much. When the grain size of the electric energy transmission body 212 is greater than 200 µm, the pull force value of the electric energy transmission body 212 when it is pulled broken is less than the qualified value. In this case, the electric energy transmission body 212 itself has a low strength, and is prone to break when subjected to a small external force, which will result in a function failure of the electric energy transmission body 212, and a failure to realize electric energy transmission. Therefore, the inventor sets the grain size of the electric energy transmission body 212 to be 5 µm to 200 µm.

Exemplarily, the electric energy transmission body 212 is made of aluminum, that is, the electric energy transmission body 212 is an aluminum busbar for charging. One end of the electric energy transmission guide rail 2 is connected to one end of the charging connection part 1, the electric energy transmission guide rail 2 includes the electric energy transmission body 212, the other end of the electric energy transmission guide rail 2 is connected to a vehicle power supply unit, and the one end of the electric energy transmission guide rail is provided with a connection area 207.

Exemplarily, both ends of the electric energy transmission guide rail 2 are provided with connection areas 207. The connection area 207 at one end of the electric energy transmission guide rail 2 is connected to an interface portion of the charging connection part 1, and the connection area 207 at the other end of the electric energy transmission guide rail 2 is connected to an electrode of the vehicle power supply unit.

The connection area 207 is connected to the charging connection part 1 and/or the vehicle power supply unit by one or more selected from the group consisting of resistance welding, friction welding, ultrasonic welding, arc welding, laser welding, electron beam welding, pressure diffusion welding, magnetic induction welding, screw welding, clamping, splicing and crimping.

The resistance welding refers to a method of welding by passing strong current through a contact point that is between an electrode and a workpiece, to generate heat by a contact resistance.

The friction welding refers to a method of welding by using the heat generated by the friction between the contact surfaces of the workpieces as a heat source, to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The electron beam welding method is a method of using accelerated and focused electron beam to bombard the welding surface that is placed in vacuum or non-vacuum, to melt the welded workpiece to achieve welding.

The pressure welding method is a method of applying pressure to weldments to make binding surfaces of the weldments be in close contact and generate a certain plastic deformation to complete the welding.

The diffusion welding refers to a solid-state welding method that pressurizes the workpiece at high temperature without producing visible deformation and relative movement.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties.

The screw welding refers to threaded connection which is a detachable connection that connects the to-be-connected parts through the threaded part (or the threaded portion of the to-be-connected part). Commonly used threaded connection parts are bolts, studs, screws and tightening screws, etc., and most of them are standard parts.

The clamping refers to that a clamping claw and a clamping slot that are corresponded to each other are arranged on a connecting end or connecting surface respectively, and the to-be-connected parts are connected to each other through the clamping slot and the clamping claw that are assembled to each other. The clamping method has advantages of fast connection and detachability.

The splicing refers to that a groove and a protrusion that are corresponded to each other are arranged on a connecting end or connecting surface respectively, and the to-be-connected parts are connected to each other by the groove and the protrusion that are mortised or spliced together. The splicing method has advantages of stable connection and detachability.

The crimping refers to a production process that the connecting end and the connecting surface that are assembled to each other are stamped into one piece using a crimping machine. The advantage of crimping is mass production, and a large amount of products with stable quality can be produced quickly by using an automatic crimping machine.

An appropriate connection method or combination of connection methods can be selected from the above connection methods according to the actual use environment and the actual state of the connection area 207 and the vehicle power supply unit or the charging connection part 1, to achieve effective electrical connection.

A first connection through hole 208 may be provided in the connection area 207. The electric energy transmission guide rail 2 may be directly connected to the vehicle battery through bolted connection. For example, the bolt passes through the first connection through hole 208 in the connection area 207 to connect and fix the other end of the electric energy transmission guide rail 2 with the electrode of the vehicle battery.

Because the hardness of aluminum material is too small to withstand the torque of bolt tightening, a gasket needs to be provided in the bolt tightening area. In addition, the battery end (i.e., the electrode) tightened by bolts with the aluminum busbar is usually copper metal, since the electrode potential difference between the aluminum material and the copper material is about 1.7 V, the contact between the two metals will cause electrochemical corrosion, and copper oxide and aluminium oxide will be generated at the contact position, which will lead to an increase in the resistance of the contact position, resulting in heat generation at the contact position to affect electric energy transmission and even accidents. In summary of the two cases described above, a transition metal between the connection area 207 and the electrode of the vehicle battery needs to be provided to solve the problems of torque caused by bolt tightening and the electrochemical corrosion caused by the connection of the two metals.

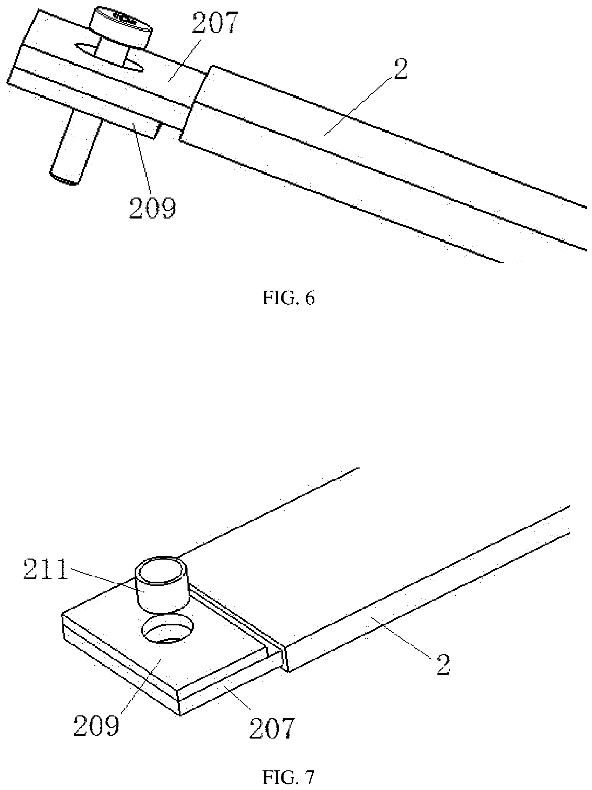

With respect to the transition metal, a first optional implementation scheme is to arrange an electric energy transit layer 209, which is stacked with and connected to the connecting area 207, and a second connection through hole 210 is provided in the electric energy transit layer 209, and the second connection through hole 210 coincides axially with the first connection through hole 208, as shown in FIGs. 5 and 6.

The electric energy transit layer 209 is connected to the connection area 207 by one or more selected from the group consisting of resistance welding, friction welding, ultrasonic welding, arc welding, laser welding, electron beam welding, pressure diffusion welding, magnetic induction welding, screw welding, clamping, splicing and crimping.

The electric energy transit layer 209 should be selected to have a certain hardness, have a certain electrical conductivity property, and have an electrode potential that is similar to the electrode potential of copper and aluminum, or contain non-active metal. For example, the material of the electric energy transit layer 209 contains or is one or more selected from the group consisting of cadmium, manganese, zirconium, cobalt, titanium, chromium, gold, silver, tin-lead alloy, silver-antimony alloy, palladium, palladium-nickel alloy, graphite silver, graphene silver, hard silver and silver-gold-zirconium alloy.

Further, the electric energy transit layer 209 and the connection area 207 are welded to each other in a laminated manner, which can be selected from one or more of pressure welding, friction welding, resistance welding and ultrasonic welding.

The thickness of the electric energy transit layer 209 may be 1 µm to 5000 µm.

In order to demonstrate the influence of the thickness of the electric energy transit layer 209 on the performance of the connection area 207, the inventor uses connection areas 207 with the same specification, with the same material, and with nickel-plated deposited metal layers having different thicknesses, to conduct a series of temperature rise tests and corrosion resistance time tests. The experimental results are shown in Table 6.

The temperature rise test is to apply the same current to the connection areas 207 after connection, to detect the temperatures at the same position of the sample of the connection area 207 before being powered on and after temperature stabilization in a closed environment, and take a difference between the two detected temperatures and obtain an absolute value of the difference. In this embodiment, a temperature rise greater than 50K is considered to be unqualified.

The test of corrosion resistance time is to put the sample of the connection area 207 into a salt fog spraying test chamber to spray salt fog to each position of the connection area 207, then take the connection area 207 out every 20 hours to clean the connection area and observe surface corrosion of the connection area (i.e., a cycle), and stop the test when the corrosion area of the surface of the connection area 207 is greater than 10% of the total area and record the number of cycles. In this embodiment, the number of cycles less than 80 is considered as being unqualified.

**Table 6: Influence of different thicknesses of the electric energy transit layer 209 on temperature rise and corrosion resistance of the sample of the connection area 207**

| Nickel plating thicknesses (unit: µm) | | | | | | | | | | | | | | |
|---|---|---|---|---|---|---|---|---|---|---|---|---|---|---|
| 0.5 | 1 | 5 | 10 | 50 | 100 | 300 | 500 | 800 | 1000 | 2000 | 3000 | 4000 | 5000 | 6000 |

| Temperature rise (unit: k) | | | | | | | | | | | | | | |
|---|---|---|---|---|---|---|---|---|---|---|---|---|---|---|
| 9.8 | 10.2 | 12.9 | 15.6 | 18.9 | 20.7 | 23.9 | 25.8 | 29.1 | 31.6 | 34.8 | 37.9 | 43.9 | 49.6 | 55.6 |

| Number of cycles of corrosion resistance test (times) | | | | | | | | | | | | | | |
|---|---|---|---|---|---|---|---|---|---|---|---|---|---|---|
| 68 | 85 | 90 | 93 | 103 | 109 | 113 | 115 | 120 | 140 | 165 | 176 | 188 | 192 | 201 |

As can be seen from Table 6, when the thickness of the electric energy transit layer 209 is less than 1 µm, although the temperature rise of the connection area 207 is qualified, the number of corrosion resistance cycles of the connection area 207 is less than 80, thus failing to meet the performance requirements, which has a great impact on both of the overall performance and service life of the electric energy transmission system, and may cause the service life of the product to decrease sharply or even failure of the product and combustion accidents in a serious situation. When the thickness of the electric energy transit layer 209 is greater than 5000 µm, the heat generated in the connection area 207 cannot be dissipated, so that the temperature rise of the connection area 207 of the electric energy transmission system is not qualified, and the thick electric energy transit layer 209 is easy to fall off the surface of the connection area 207, resulting in a decrease in the number of corrosion resistance cycles. Therefore, the inventor selects the thickness of the electric energy transit layer 209 to be 1 µm to 5000 µm. Exemplarily, when the thickness of the nickel sheet is greater than or equal to 50 µm, the corrosion resistance is better; when the thickness of the nickel sheet is smaller than or equal to 3000 µm, the temperature rise value is less than 40K. Therefore, the thickness of the electric energy transit layer 209 is preferably 50 µm to 3000 µm.

The electric energy transmission guide rail 2 having a width of 120 mm is taken as an example, the electric energy transit layer 209 is welded on the connection area 207. In order to demonstrate the influence of different materials of the electric energy transit layer 209 on the performance of the connection area 207, the inventor adopts the connection areas 207 with the same specification, with the same material, and with the electric energy transit layer 209 made of different materials, to conduct a series of corrosion resistance time tests. The experimental results are shown in Table 7.

The test of corrosion resistance time in Table 7 is to putt the sample of the connection area 207 into a salt fog spraying test chamber to spray salt fog to each position of the connection area 207, then take the connection area 207 out every 20 hours to clean the connection area and observe surface corrosion of the connection area (i.e., a cycle), and stop the test when the corrosion area of the surface of the sample of the connection area 207 is greater than 10% of the total area and record the number of cycles. In this embodiment, the number of cycles less than 80 is considered as being unqualified.

**Table 7: Influence of different materials of the electric energy transit layer 209 on corrosion resistance of the sample of the connection area 207**

| Different materials of the electric energy transit layer 209 | | | | | | | | | | | | | | | | |
|---|---|---|---|---|---|---|---|---|---|---|---|---|---|---|---|---|
| Nickel | Cadmium | | Manganese | | Zirconium | | Cobalt | | Tin | | Titanium | | Zinc | | Chromium | |

| Number of cycles of corrosion resistance test (times) | | | | | | | | | | | | | | | | |
|---|---|---|---|---|---|---|---|---|---|---|---|---|---|---|---|---|
| 89 | 126 | | 122 | | 130 | | 126 | | 84 | | 125 | | 82 | | 108 | |
| | | | | | | | | | | | | | | | | |

| Different materials of the electric energy transit layer 209 | | | | | | | | | | | | | | | | |
|---|---|---|---|---|---|---|---|---|---|---|---|---|---|---|---|---|
| Gold | Silver | Silver-antimony Alloy | | Graphite-silver | | Graphene-silver | | Silver-gold-zirconium Alloy | | Palladium | | Palladium-nickel Alloy | | Tin-lead Alloy | | Hard silver |

| Number of cycles of corrosion resistance test (times) | | | | | | | | | | | | | | | | |
|---|---|---|---|---|---|---|---|---|---|---|---|---|---|---|---|---|
| 135 | 128 | 125 | | 133 | | 126 | | 134 | | 117 | | 125 | | 119 | | 135 |

As can be seen from Table 7, when the material of the electric energy transit layer 209 contains commonly used metals such as tin, nickel and zinc, the experimental results are not as good as those of other selected metals; the experimental results of other metals exceed the standard values much, and the performance is relatively stable. Therefore, the inventor selects the material of the electric energy transit layer 209 to contain one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite-silver, graphene-silver, hard silver and silver-gold-zirconium alloy. Further exemplarily, the inventor selects the material of the electric energy transit layer 209 to contain or be one or more selected from the group consisting of cadmium, manganese, zirconium, cobalt, titanium, chromium, gold, silver, tin-lead alloy, silver-antimony alloy, palladium, palladium-nickel alloy, graphite-silver, graphene-silver, hard silver and silver-gold-zirconium alloy.

In addition, a transition connection ring 211 may be arranged in the first connection through hole 208 and the second connection through hole 210 in a sleeving manner, and the transition connection ring 211 is in an interference fit or is attached to the first connection through hole 208 and the second connection through hole 210, so as to avoid corrosion caused by dissimilar metal overlapping at the connection position. The material of the transition connection ring 211 contains or is one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite-silver, graphene-silver, hard silver and silver-gold-zirconium alloy.

The material of the transition connection ring 211 may also be the same as that of the electric energy transit layer 209, as shown in FIG. 6.

The transition connection ring 211 may be made of metal. An outer transition layer may be arranged on a circumferential outer surface of the transition connection ring 211. The material of the outer transition layer contains or is one or more selected from the group consisting of nickel, cadmium, manganese, zirconium, cobalt, tin, titanium, zinc, chromium, gold, silver, tin-lead alloy, silver-antimony alloy, palladium, palladium-nickel alloy, graphite-silver, graphene-silver, hard silver and silver-gold-zirconium alloy.

The material of the outer transition layer is the same as that of the electric energy transmission body 212.

With respect to the transition metal, a second optional implementation scheme is to arrange a deposited metal layer on the connection surface (i.e., a surface facing the battery electrode) of the connection area 207. The material of the deposited metal layer contains or is one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite-silver, graphene-silver, hard silver and silver-gold-zirconium alloy. The deposited metal layer is realized by physical vapor deposition. The material of the deposited metal layer is the same as the material of an electrode that is in overlap joint with the connection area 207. Such a scheme can also enhance the surface strength of the connection area 207, and avoid the corrosion caused by the overlap joint between the connection area 207 and a metal dissimilar thereto.

The electric energy transmission guide rail 2 having a width of 120 mm is taken as an example. A deposited metal layer is arranged on the connection area 207. In order to demonstrate the influence of different materials of the deposited metal layer on the performance of the connection area 207, the inventor adopts the connection areas 207 with the same specification with the same material, and with the deposited metal layers made of different materials, to conduct a series of corrosion resistance time tests. The experimental results are shown in Table 8.

The test of corrosion resistance time in Table 8 is to put the sample of the connection area 207 into a salt fog spraying test chamber to spray salt fog to each position of the connection area 207, then take the connection area 207 out every 20 hours to clean the connection area and observe surface corrosion of the connection area (i.e., a cycle), and stop the test when the corrosion area of the surface of the sample of the connection area 207 is greater than 10% of the total area and record the number of cycles. In this embodiment, the number of cycles less than 80 is considered as being unqualified.

**Table 8: Influence of different materials of the deposited metal layer on corrosion resistance of the sample of the connection area 207**

| Different materials of the transition layer | | | | | | | | | |
|---|---|---|---|---|---|---|---|---|---|
| Nickel | Cadmium | Manganese | Zirconium | Cobalt | Tin | Titanium | Zinc | Chromium | |

| Number of cycles of corrosion resistance test (times) | | | | | | | | | |
|---|---|---|---|---|---|---|---|---|---|
| 87 | 128 | 119 | 129 | 128 | 85 | 122 | 84 | 108 | |
| | | | | | | | | | |

| Different materials of the transition layer | | | | | | | | | |
|---|---|---|---|---|---|---|---|---|---|
| Gold | Silver | Silver-antimony Alloy | Graphite-silver | Graphene-silver | Silver-gold-zirconium Alloy | Palladium | Palladium-nickel Alloy | Tin-lead Alloy | Hard silver |

| Number of cycle of corrosion resistance test (times) | | | | | | | | | |
|---|---|---|---|---|---|---|---|---|---|
| 134 | 128 | 122 | 136 | 126 | 134 | 112 | 122 | 114 | 138 |

As can be seen from Table 8, when the material of the deposited metal layer contains commonly used metals such as tin, nickel and zinc, the experimental results are not as good as those of other selected metals; the experimental results of other metals exceed the standard values much, and the performance is relatively stable. Therefore, the inventor selects the material of the deposited metal layer to contain or be one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite-silver, graphene-silver, hard silver and silver-gold-zirconium alloy. Further exemplarily, the inventor selects the material of the deposited metal layer to contain or be one or more selected from the group consisting of cadmium, manganese, zirconium, cobalt, titanium, chromium, gold, silver, tin-lead alloy, silver-antimony alloy, palladium, palladium-nickel alloy, graphite-silver, graphene-silver, hard silver and silver-gold-zirconium alloy.

The thickness of the deposited metal layer may be 1 µm to 5000 µm.

In order to demonstrate the influence of the thickness of the deposited metal layer on the performance of the connection area 207, the inventor uses the connection areas 207 with the same specification, the same material, and with nickel-plated deposited metal layers having different thickness, to conduct a series of temperature rise tests and corrosion resistance time tests. The experimental results are shown in Table 9.

The temperature rise test is to apply the same current to the connection areas 207 after connection, to detect the temperatures at the same position of the sample of the connection area 207 before being powered on and after temperature stabilization in a closed environment, and take a difference between the two detected temperatures and obtain an absolute value of the difference. In this embodiment, a temperature rise greater than 50K is considered to be unqualified.

The test of corrosion resistance time is to put the sample of the connection area 207 into a salt fog spraying test chamber to spray salt fog to each position of the connection area 207, then take the connection area 207 out every 20 hours to clean the connection area and observe surface corrosion of the connection area (i.e., a cycle), and stop the test when the corrosion area of the surface of the connection area 207 is greater than 10% of the total area and record the number of cycles. In this embodiment, the number of cycles less than 80 is considered as being unqualified.

**Table 9: Influence of different thicknesses of the deposited metal layer on temperature rise and corrosion resistance of the sample of the connection area**

| Nickel plating thicknesses (µm) | | | | | | | | | | | | | | |
|---|---|---|---|---|---|---|---|---|---|---|---|---|---|---|
| 0.5 | 1 | 5 | 10 | 50 | 100 | 300 | 500 | 800 | 1000 | 2000 | 3000 | 4000 | 5000 | 6000 |

| Temperature rise (k) | | | | | | | | | | | | | | |
|---|---|---|---|---|---|---|---|---|---|---|---|---|---|---|
| 10.2 | 12.4 | 14.9 | 16.2 | 18.8 | 19.8 | 24.6 | 26.5 | 28.4 | 30.8 | 34.8 | 36.4 | 44.9 | 49.6 | 55.6 |

| Number of cycles of corrosion resistance test (times) | | | | | | | | | | | | | | |
|---|---|---|---|---|---|---|---|---|---|---|---|---|---|---|
| 78 | 96 | 105 | 110 | 112 | 113 | 115 | 117 | 120 | 141 | 166 | 177 | 189 | 193 | 202 |

As can be seen from Table 9, when the thickness of the deposited metal layer is less than 1 µm, although the temperature rise of the sample of the connection area 207 is qualified, the number of corrosion resistance cycles of the sample of the connection area 207 is less than 80 due to the deposited metal layer being too thin,, thus failing to meet the performance requirements, which has a great impact on both of the overall performance and service life of the electric energy transmission system, and may cause the service life of the product to decrease sharply or even failure of the product and combustion accidents in a serious situation. When the thickness of the deposited metal layer is greater than 5000 µm, the heat generated in the connection area 207 cannot be dissipated, so that the temperature rise of the connection area 207 of the electric energy transmission system is not qualified, and the thick deposited metal layer is easy to fall off the surface of the connection area 207, resulting in a decrease in the number of corrosion resistance cycles. Therefore, the inventor selects a deposited metal layer with a thickness of 1 µm to 5000 µm. Exemplarily, when the thickness of the nickel sheet is greater than or equal to 1 µm, the corrosion resistance is better; when the thickness of the nickel sheet is smaller than or equal to 100 µm, the temperature rise value is less than 20K, thus the thickness of the electric energy transit layer 209 is exemplarily 1 µm to 100 µm.

The deposited metal layer is plated on the connection surface of connection area 207 by one or more selected from the group consisting of electroplating, chemical plating, magnetron sputtering and vacuum plating.

The electroplating is a process of plating, on a surface of some metal, a thin layer of other metal or alloy using electrolysis principle.

The chemical plating is a deposition process that produces a metal through a controllable oxidation-reduction reaction under a metal catalytic action.

The magnetron sputtering is to use an interaction of a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal and non-metal films on the surface of a part by means of distillation or sputtering under a vacuum condition.

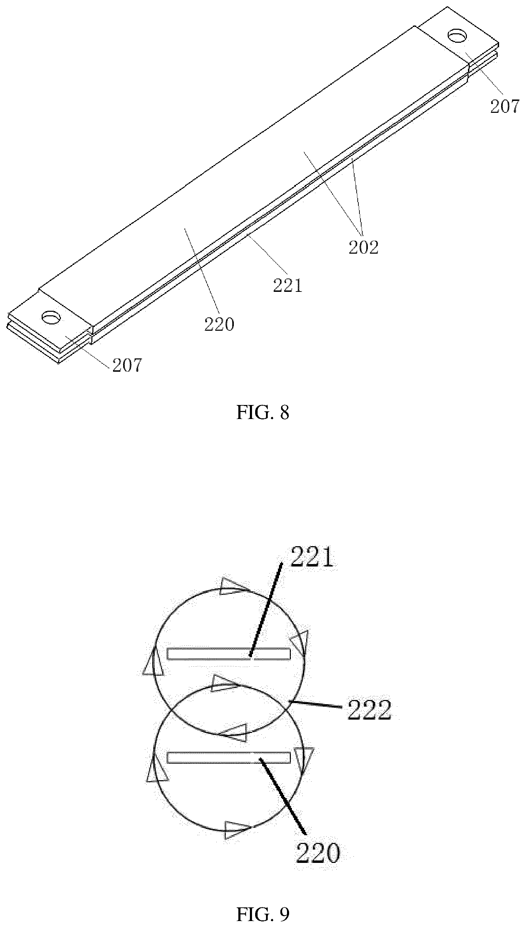

When the electric energy transmission guide rail 2 is a DC electric energy transmission system 202, the electric energy transmission guide rail 2 may generate an induced magnetic field 222 when it is powered on, and the induced magnetic field 222 may cause electromagnetic interference to the outside world. The usual solution in the prior art is to provide an electromagnetic shielding layer outside the wire. In order to eliminate the shielding structure, reduce the cost and reduce the weight, the present disclosure adopts the following design: the electric energy transmission system for a vehicle includes two electric energy transmission guide rails that are stacked with each other, the two electric energy transmission guide rails 2 are respectively a DC positive electric energy transmission system 220 and a DC negative electric energy transmission system 221 (that is, the electric energy transmission guide rails 2 include two DC electric energy transmission systems 202, one of which is a DC positive electric energy transmission system 220, and the other of which is a DC negative electric energy transmission system 221), and each electric energy transmission guide rail 2 includes an electric energy transmission body 212, as shown in FIG. 8.

The electric energy transmission system includes at least two electric energy transmission guide rails 2 that are stacked.

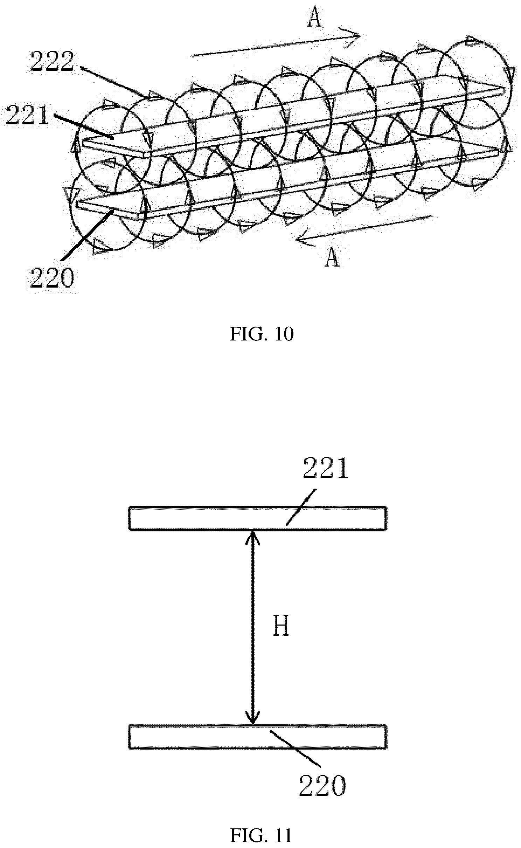

When the two electric energy transmission guide rails 2 are stacked one above the other, magnetic fields generated by them as shown in FIGs. 9 and 10. As the electric energy transmission guide rail 2 is of a flat structure, its magnetic field is strongest at its portion with the largest area, so that the magnetic fields generated by the positive and negative charging aluminum busbars cancel out each other by stacking the electric energy transmission guide rails 2 (since the currents in the two electric energy transmission guide rails 2 have the same magnitude and the opposite directions A, the induced magnetic fields have the same intensity and opposite directions), so as to eliminate the electromagnetic interference to other electrical components when the electric energy transmission guide rail 2 is powered on.

The distance between the two electric energy transmission guide rails 2 and the overlapping degree of the two electric energy transmission guide rails 2 have a great influence on the degree of cancellation of the magnetic field, so that in the present disclosure, the magnetic fields of the electric energy transmission guide rails 2 can be effectively cancelled out each other by controlling the stacking design of the two electric energy transmission guide rails 2 and the stacking distance and overlapping degree of the two electric energy transmission guide rails 2, so as to eliminate a shielding layer structure of the electric energy transmission system and reduce the cost and weight.

Width directions of the two electric energy transmission guide rails 2 are parallel to each other. The electric energy transmission bodies 212 of the two electric energy transmission guide rails 2 are mirror images of each other. The distance between the electric energy transmission bodies 212 of the two electric energy transmission guide rails 2 is H, as shown in FIG. 11. The stacking direction of the electric energy transmission bodies 212 of the two electric energy transmission guide rails 2 is the up-down direction in FIG. 10.

When the overlapping degree of the electric energy transmission bodies 212 of the two electric energy transmission guide rails 2 in the stacking direction is 100%, the influence of the distance H between the electric energy transmission bodies 212 of the two electric energy transmission guide rails 2 on the cancellation of the magnetic field is shown in Table 10. Magnetic-field cancellation percentage greater than 30% is a qualified value.

**Table 10: Influence of distance H between aluminum conductors on magnetic field cancellation when the overlapping area of two electric energy transmission bodies 212 is 100%**

| Distance between positive and negative electric energy transmission bodies (H) | Magnetic-field cancellation percentage | | | | |
|---|---|---|---|---|---|
| | Sample 1 | Sample 2 | Sample 3 | Sample 4 | Sample 5 |
| 30 cm | 0.0% | 0.0% | 0.0% | 0.0% | 0.0% |
| 29 cm | 11.0% | 11.1% | 11.3% | 10.9% | 11.0% |
| 28 cm | 15.2% | 20.7% | 25.2% | 25.4% | 24.6% |
| 27 cm | 30.6% | 30.3% | 30.1% | 30.7% | 30,3% |
| 25 cm | 40.6% | 42.1% | 45.1% | 41.7% | 40.3% |
| 23 cm | 51.4% | 50.2% | 52.2% | 53.3% | 51.2% |
| 21 cm | 59.3% | 50.1% | 58.6% | 59.3% | 61.2% |
| 19 cm | 70.4% | 60.4% | 65.1% | 68.3% | 70.2% |
| 17 cm | 75.9% | 76.3% | 77.1% | 75.9% | 78.2% |
| 15 cm | 80.4% | 81.1% | 79.1% | 80.3% | 80.2% |
| 13 cm | 85.6% | 86.7% | 89.4% | 84.8% | 81.9% |
| 11 cm | 90.8% | 89.0% | 91.2% | 90.3% | 91.5% |
| 9 cm | 90.8% | 91.0% | 93.0% | 93.1% | 92.9% |
| 7 cm | 99.9% | 100.0% | 100.0% | 100.0% | 100.0% |
| 5 cm | 100.0% | 99.80% | 100.0% | 100.0% | 99.7% |
| 3 cm | 100.0% | 100.0% | 100.0% | 99.9% | 100.0% |
| 2 cm | 100.0% | 99.9% | 100.0% | 99.9% | 100.0% |
| 1 cm | 99.8% | 99.9% | 100.0% | 99.9% | 100.0% |

The overlapping degree means a percentage of an overlapping area between the electric energy transmission bodies 212 of the two electric energy transmission guide rails 2 in the stacking direction to an area of the electric energy transmission body 212 of one electric energy transmission guide rail 2.

As can be seen from Table 10, when the overlapping degree of the electric energy transmission bodies 212 of the two electric energy transmission guide rails 2 in the stacking direction is 100%, and the distance H between the electric energy transmission bodies 212 of the two electric energy transmission guide rails 2 is less than or equal to 27 cm, the magnetic-field cancellation percentage is qualified, which is effective in preventing electromagnetic interference. Exemplarily, when the distance between the electric energy transmission bodies 212 of the two electric energy transmission guide rails 2 is less than or equal to 7 cm, the magnetic fields can be effectively cancelled out, and the effect is obvious, so that the distance H between the electric energy transmission bodies 212 of the two electric energy transmission guide rails 2 is set to be less than or equal to 7 cm.

When the distance between the electric energy transmission bodies 212 of the two electric energy transmission guide rails 2 is 7 cm, the influence of the overlapping degree of the two electric energy transmission guide rails 2 in the stacking direction on the magnetic-field cancellation is shown in Table 11, and the magnetic-field cancellation percentage greater than 30% is considered to be a qualified value.

**Table 11: Influence of overlapping area of the electric energy transmission guide rails 2 on magnetic-field cancellation when the distance between two electric energy transmission bodies 212 is 7 cm**

| Overlapping area between the electric energy transmission guide rails (A) | Magnetic-field cancellation percentage | | | | |
|---|---|---|---|---|---|
| | Sample 1 | Sample 2 | Sample 3 | Sample 4 | Sample 5 |
| 0% | 0.0% | 0.0% | 0.0% | 0.0% | 0.0% |
| 10% | 12.1% | 12.2% | 11.8% | 12.0% | 11.9% |
| 30% | 20.5% | 20.8% | 22.5% | 24.6% | 22.3% |
| 40% | 30.1% | 30.8% | 31.1% | 31.3% | 32.1% |
| 50% | 45.8% | 43.6% | 46.9% | 48.3% | 43.6% |
| 70% | 49.9% | 50.3% | 50.8% | 51.2% | 49.8% |
| 90% | 60.2% | 60.7% | 60.1% | 60.6% | 61.1% |
| 95% | 80.1% | 80.1% | 80.9% | 80.8% | 80.8% |
| 98% | 97.3% | 97.8% | 97.2% | 97.4% | 97.1% |
| 100% | 99.8% | 100.0% | 100.0% | 100.0% | 99.9% |

As can be seen from Table 11, in the case where the distance between the electric energy transmission bodies 212 of the two electric energy transmission guide rails 2 is 7 cm, when the overlapping degree of the two electric energy transmission guide rails 2 in the stacking direction is 40% to 100%, the magnetic-field cancellation percentage is qualified, which is effective in preventing electromagnetic interference; when the overlapping degree of the two electric energy transmission guide rails 2 in the stacking direction is above 90%, the effect is obvious; and when the overlapping degree of the two electric energy transmission guide rails 2 in the stacking direction is 100%, the effect is optimal.

The electric energy transmission guide rail 2 includes an electric energy transmission body 212 and a protection device that is sleeved on an outer side of the electric energy transmission body 212.

The protection device has a shielding function, and the transfer impedance of the protection device is less than or equal to 100 mΩ.

The protection device is an insulator 213.

The electric energy transmission guide rail 2 includes an electric energy transmission body 212 (i.e., the flat strip-shaped conductor metal described above) and an insulator 213 that is sleeved on an outer side of the electric energy transmission body 212, and the electric energy transmission guide rail 2 includes a heat dissipation structure capable of cooling the electric energy transmission body 212. Exemplarily, a cooling rate of the heat dissipation structure is greater than or equal to 0.5 °C/min.

In order to verify the influence of the cooling rate of the heat dissipation structure on the temperature rise of the electric energy transmission guide rail 2, the inventor selects 10 electric energy transmission guide rails 2 with the same cross-sectional area, with the same material and with the same length, applies the same current to the 10 electric energy transmission guide rails, uses a heat dissipation structure with different cooling rates to cool the electric energy transmission guide rails 2, and reads a temperature rise value of each electric energy transmission guide rail 2. The temperature rise values are recorded in Table 12.

The experimental method is to apply the same current to the electric energy transmission guide rails 2 having heat dissipation structures of different cooling rates in a closed environment, record the temperature of the electric energy transmission guide rails 2 before the current is applied and the stable temperature thereof after the current is applied, and take a difference between the two recorded temperatures and obtain an absolute value of the difference. In this embodiment, a temperature rise less than 50K is considered to be a qualified value.

**Table 12: Influence of heat dissipation structure with different cooling rates on temperature rise of the electric energy transmission guide rail 2**

| Cooling rate of the electric energy transmission guide rail (unit: °C/min) | | | | | | | | | | | | |
|---|---|---|---|---|---|---|---|---|---|---|---|---|
| 0.01 | 0.03 | 0.05 | 0.1 | 0.3 | 0.5 | 1 | 2 | 3 | 4 | 5 | 6 | 7 |

| Temperature rise of the electric energy transmission guide rail (unit: k) | | | | | | | | | | | | |
|---|---|---|---|---|---|---|---|---|---|---|---|---|
| 63.8 | 58.5 | 55.6 | 52.7 | 50.2 | 48.5 | 41.4 | 37.1 | 33.2 | 30.9 | 27.5 | 26.8 | 26.5 |

As can be seen from Table 12 above, when the cooling rate of the heat dissipation structure is less than 0.5 °C/min, the temperature rise value of the electric energy transmission guide rail 2 is unqualified. The greater the cooling rate of the heat dissipation structure is, the smaller the temperature rise value of the electric energy transmission guide rail 2 is. Therefore, the inventor sets the cooling rate of the heat dissipation structure to be greater than or equal to 0.5 °C/min.

In this embodiment, both the electric energy transmission body 212 and the insulator 213 may be made of existing materials. The ratio of the width of the electric energy transmission guide rail 2 to the thickness thereof may be 2:1 to 20:1. The ratio of the width of the electric energy transmission body 212 to the thickness thereof may be 2:1 to 20:1.

In this embodiment, the gap between the electric energy transmission body 212 and the insulator 213 is less than or equal to 1 cm.

Alternatively, the protective device may also be a protective plastic shell which is integrally injection-molded with the electric energy transmission body 212. Specifically, the protective plastic shell may be an insulator 213 or an injection conductive plastic or a combination thereof.

In an embodiment, the protection device has a shielding function, and a transfer impedance of the protection device is less than 100 mΩ. The shielding effect of the protection device is usually characterized by the transfer impedance of the shielding material, and the smaller the transfer impedance is, the better the shielding effect is. The transfer impedance is defined as a ratio of a differential mode voltage U induced by a shield per unit length to a current Is passing through the surface of the shield, i.e., Z_{T}=U/I_{S}, so that it can be understood that the transfer impedance of the protection device converts the current of the protection device into differential mode interference. The smaller the transfer impedance is, the better it is. That is, better shielding performance can be obtained by reducing the converted differential mode interference.

In order to verify the shielding impedance of the protection device, the following experiment specifically uses the protective plastic shell as a specific embodiment.

In order to verify the influence of the protective plastic shells with different transfer impedance values on the shielding effect of the electric energy transmission guide rail 2, the inventor uses protective plastic shells with different transfer impedance values to make a series of the electric energy transmission guide rails 2, and tests the shielding effect of the electric energy transmission guide rails 2 respectively. The experimental results are shown in Table 13 below. In this embodiment, the shielding performance value of the electric energy transmission guide rail 2 greater than 40 dB is considered to be an ideal value.

The test method of the shielding performance value is to use test instrument to output a signal value (this value is recorded as test value 2) to the electric energy transmission guide rail 2, and provide a detection device outside the electric energy transmission guide rail 2, and the detection device detects a signal value (this value is recorded as test value 1). Shielding performance value = test value 2 - test value 1.

**Table 13: Influence of transfer impedance of the protective plastic shell on the shielding performance**

| Measuring parameter | Transfer impedance of the protective plastic shell (unit: mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 78 | 75 | 71 | 66 | 62 | 58 | 53 | 48 | 42 | 31 | 27 |

As can be seen from Table 13, when the transfer impedance value of the protective plastic shell is greater than 100 mΩ, the shielding performance value of the electric energy transmission guide rail 2 is less than 40 dB, which does not meet the requirements of the ideal value; and when the transfer impedance value of the protective plastic shell is less than 100 mΩ, the shielding performance values of the electric energy transmission guide rail 2 all meet the requirement of the ideal value, and the trend is getting better and better. Therefore, the inventor sets the transfer impedance of the protective plastic shell to be less than 100 mΩ.

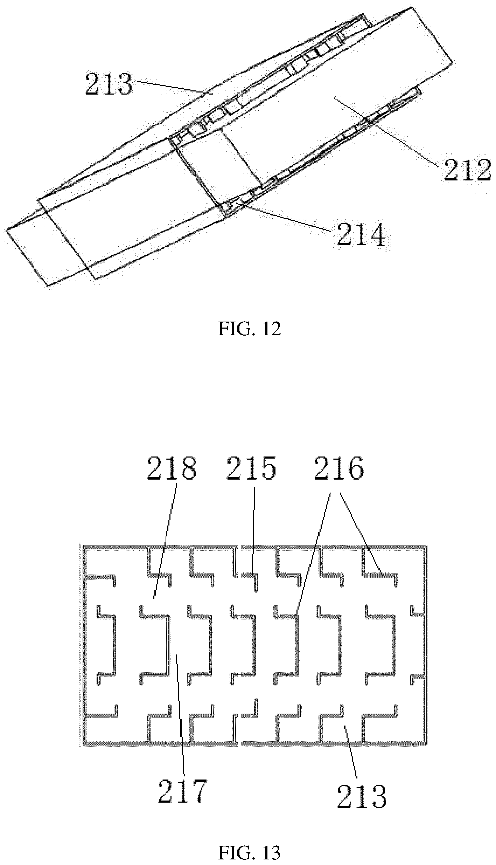

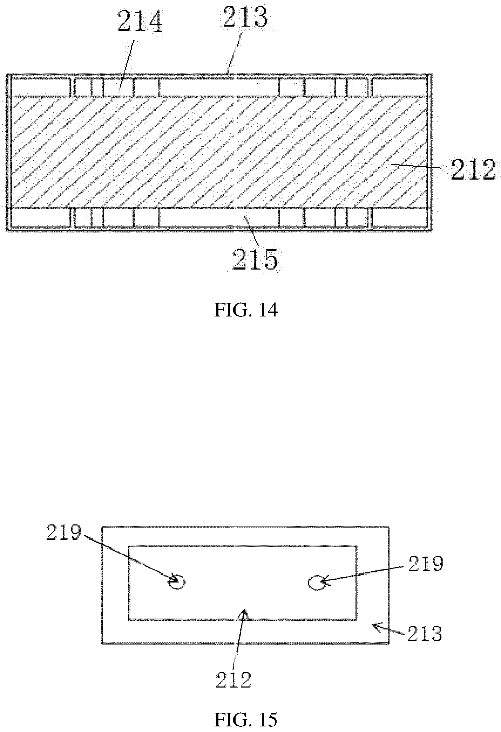

The heat dissipation structure is an air-cooled heat dissipation channel 214, the electric energy transmission guide rail 2 includes an air-cooled heat dissipation channel 214, and the air-cooled heat dissipation channel 214 is in communication with outside of the electric energy transmission system for a vehicle, as shown in FIGs. 12 and 14.

The air-cooled heat dissipation channel 214 is located between the electric energy transmission body 212 and the protection device. The protection device is an insulator 213. An inner surface of the insulator 213 is provided with a support structure 215, and the electric energy transmission body 212 is in direct contact with the support structure 215. The electric energy transmission body 212, the insulator 213 and the support structure 215 enclose the air-cooled heat dissipation channel 214.

Specifically, the support structure 215 includes a plurality of support bars or support blocks 216 arranged in circumferential and axial directions of the electric energy transmission guide rail 2. For example, the support bars are roughly U-shaped. The air-cooled heat dissipation channel 214 includes a circumferential channel 217 and an axial channel 218, and the circumferential channel 217 is in communication with the axial channel 218, as shown in FIG. 13.

The axial direction of the electric energy transmission guide rail 2 is the left-right direction in FIG. 13, and is also a direction perpendicular to the paper direction in FIG. 14. The circumferential channel 217 extends in the up-down direction shown in FIG. 13, and the axial channel 218 extends in the left-right direction shown in FIG. 13.

When the current is increased, the conductor electric energy transmission body 212 heats up, and the heat can be dissipated through the air that is circulated in the air-cooled heat dissipation channel 214, so as to achieve the effect of reducing the wire diameter. The heat dissipation effect of the the electric energy transmission guide rail 2 is also closely related to its size, and for example, the larger the width of the electric energy transmission guide rail 2 and the smaller the thickness thereof are, the better the heat dissipation is.

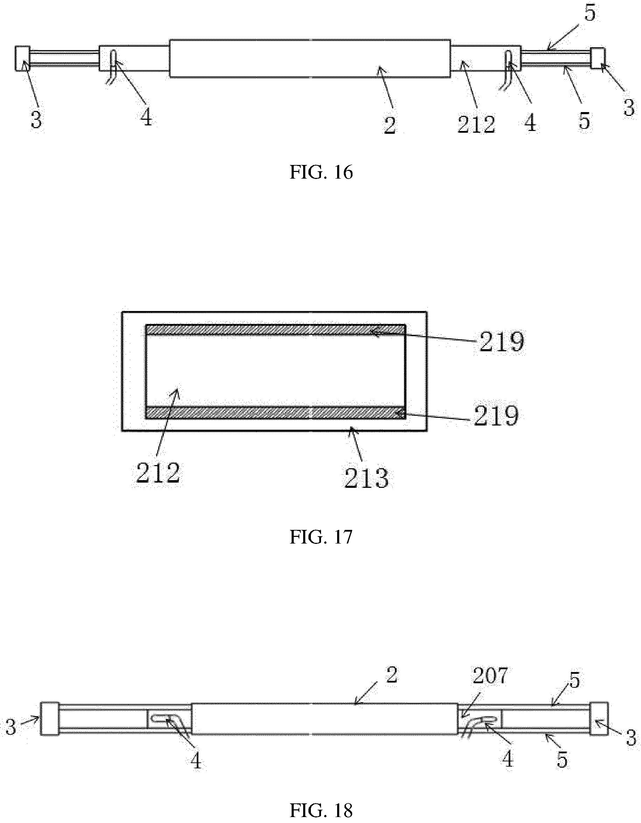

In order to avoid waste and save energy, the electric energy transmission system for a vehicle further includes a temperature sensor 4 which is capable of measuring the temperature of the electric energy transmission guide rail 2. Exemplarily, the temperature sensor 4 is located in connection area 207, that is, the temperature sensor 4 is in contact with the connection area 207, as shown in FIGs. 16 and 18. Alternatively, the temperature sensor 4 may be arranged within a range with a radius of no more than 9 cm around the connection area 207.

The temperature sensor 4 is a NTC temperature sensor or a PTC temperature sensor. The advantage of using the two types of temperature sensors is that the two temperature sensors are small in size and are able to measure voids that cannot be measured by other thermometers. The two types of temperature sensors are easy to use, and the resistance value thereof can be arbitrarily selected between 0.1 kΩ and 100 kΩ. The two types of temperature sensors can be easily processed into complex shapes, can be produced in mass, have good stability and strong overload capacity, and can be applied to products such as conversion joints that require small volume and stable performance.

One end of the electric energy transmission guide rail 2 is connected with the charging connection part 1, and the construction of one end of the electric energy transmission guide rail 2 may be the same as the construction of the other end of the electric energy transmission guide rail 2. The one end of the electric energy transmission guide rail 2 may be connected to the charging connection part 1 in a connection manner in which the other end of the electric energy transmission guide rail 2 is connected to the electrode of the charging battery described above. That is, one end of the electric energy transmission guide rail 2 may also be provided with a connection area 207, an electric energy transit layer 209 or a transition metal layer, etc.

A charging device will now be described below. The charging device includes an electric energy transmission system for a vehicle described above. The charging connection part 1 is a charging plug or a charging socket. The other end of the electric energy transmission guide rail 2 is connected to a power supply terminal. In this case, the electric energy transmission system for a vehicle is located in the charging gun, and the charging connection part 1 is exemplarily a charging plug.

An electric vehicle will now be described. The electric vehicle includes an electric energy transmission system for a vehicle described above and a charging battery. The charging connection part 1 is a charging plug or a charging socket. The other end of the electric energy transmission guide rail 2 is connected to an electrode of the charging battery. In this case, the electric energy transmission system for a vehicle is located in the electric vehicle, and the charging connection part 1 is exemplarily a charging socket.

The foregoing is merely a specific embodiment of the present disclosure and is not intended to limit the scope of the present disclosure.

## Claims

1. An electric energy transmission system for a vehicle, wherein the electric energy transmission system for a vehicle comprises at least two electric energy transmission guide rails (2) stacked with each other and a charging connection part (1) that is connected to an external charging system, and one end of the electric energy transmission guide rail (2) is connected to one end of the charging connection part (1), wherein the electric energy transmission guide rail (2) is a charging rail,
wherein the electric energy transmission guide rail (2) comprises an electric energy transmission body (212) and a protection device, wherein the electric energy transmission guide rails (2) are respectively a DC positive electric energy transmission system (220) and a DC negative electric energy transmission system (221), currents in the two electric energy transmission guide rails (2) have a same magnitude and opposite directions (A), width directions of the two electric energy transmission guide rails (2) are parallel to each other, so as to eliminate the electromagnetic interference to other electrical components when the electric energy transmission guide rail (2) is powered on;
wherein the electric energy transmission guide rail (2) comprises a heat dissipation structure, the heat dissipation structure is capable of cooling the electric energy transmission body (212), and the heat dissipation structure is located between the electric energy transmission body (212) and the protection device, **characterized in that** the protection device is an insulator (213), the heat dissipation structure comprises an air-cooled heat dissipation channel (214), and the air-cooled heat dissipation channel (214) is located between the electric energy transmission body (212) and the protection device; an inner surface of the protection device is provided with a support structure (215), the electric energy transmission body (212) is in contact with the support structure (215), and the electric energy transmission body (212), the protection device and the support structure (215) enclose the air-cooled heat dissipation channel (214); the support structure (215) comprises a plurality of support bars or support blocks (216) arranged in circumferential and axial directions of the electric energy transmission guide rail (2), or the air-cooled heat dissipation channel (214) comprises a circumferential channel (217) and an axial channel (218) that are in communication with each other.

2. The electric energy transmission system according to claim 1, wherein in a space rectangular coordinate system with X, Y, and Z axes as coordinate axes, the electric energy transmission guide rail (2) comprises a Z-direction bending section (205) and/or an XY-direction bending section (206); or
the electric energy transmission guide rail (2) comprises at least one helical portion (203), preferably wherein a helix pitch (204) of the helical portion (203) is greater than or equal to 8 mm.

3. The electric energy transmission system according to claim 1, wherein the electric energy transmission guide rail (2) comprises a flat strip-shaped electric energy transmission body (212) that is made of a material containing one or more selected from the group consisting of aluminum, phosphorus, tin, copper, iron, manganese, chromium, titanium and lithium.

4. The electric energy transmission system according to claim 3, wherein the material of the electric energy transmission body (212) contains aluminum; or
a tensile strength of the electric energy transmission body (212) is 30 MPa to 230 MPa, preferably wherein the tensile strength of the electric energy transmission body (212) is 40 MPa to 170 MPa; or
an elongation at break of the electric energy transmission body (212) is 2% to 60%; or
a hardness of the electric energy transmission body (212) is 8 HV to 105 HV, preferably wherein the hardness of the electric energy transmission body (212) is 10 HV to 55 HV; or
a grain size of the electric energy transmission body (212) is 5 µm to 200 µm.

5. The electric energy transmission system according to claim 1, wherein the other end of the electric energy transmission guide rail (2) is connected to a vehicle power supply unit; and
the electric energy transmission guide rail (2) is provided with a connection area (207).

6. The electric energy transmission system according to claim 5, wherein the electric energy transmission system for a vehicle further comprises an electric energy transit layer (209) serving as a transition metal between the connection area (207) and an electrode of the vehicle battery, wherein the electric energy transit layer (209) is stacked with and connected to the connection area (207), the electric energy transit layer (209) contains or is one or more selected from a group consisting of cadmium, manganese, zirconium, cobalt, titanium, chromium, gold, silver, tin-lead alloy, silver-antimony alloy, palladium, palladium-nickel alloy, graphite-silver, graphene-silver, hard silver and silver-gold-zirconium alloy; preferably wherein
the connection area (207) is provided therein with a first connection through hole (208), the electric energy transit layer (209) is provided therein with a second connection through hole (210) which is axially coincident with the first connection through hole (208); preferably wherein
a transition connection ring (211) is arranged in the first connection through hole (208) and the second connection through hole (210) in a sleeving manner, and the transition connection ring (211) is in an interference fit or is attached to the first connection through hole (208) and the second connection through hole (210).

7. The electric energy transmission system according to claim 5, wherein a deposited metal layer is arranged on a connection surface of the connection area (207); preferably wherein
the deposited metal layer is made of a material containing one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite-silver, graphene-silver, hard silver and silver-gold-zirconium alloy; or the material of the deposited metal layer is the same as that of an electrode that is in overlap joint with the connection area (207); or a thickness of the deposited metal layer is 1 µm to 5000 µm.

8. The electric energy transmission system according to claim 1, wherein the electric energy transmission bodies (212) of the two electric energy transmission guide rails (2) are mirror images of each other; or an overlap degree of the electric energy transmission bodies (212) of the two electric energy transmission guide rails (2) in a stacking direction is 40% to 100%.

9. The electric energy transmission system according to claim 1, wherein a gap between the electric energy transmission body (212) and the protection device is less than or equal to 1 cm; or the protective device is a protective plastic shell; or the protection device has a shielding function, and a transfer impedance of the protection device is less than 100 mΩ.

10. The electric energy transmission system according to claim 5, wherein the electric energy transmission system for a vehicle further comprises a temperature sensor (4), the temperature sensor (4) is arranged on the connection area (207) or arranged within a range with a radius of no more than 9 cm around the connection area (207), and the temperature sensor (4) is configured to measure a temperature of the electric energy transmission guide rail (2).

11. A charging apparatus comprising the electric energy transmission system according to any one of claims 1 to 10, and the charging connection part (1) is a charging plug or a charging socket.

12. An electric vehicle comprising the electric energy transmission system according to any one of claims 1 to 10, and the charging connection part (1) is a charging plug or a charging socket.

## Patentansprüche

1. Elektrisches Energieübertragungssystem für ein Fahrzeug, wobei das elektrische Energieübertragungssystem für ein Fahrzeug mindestens zwei übereinander gestapelte elektrische Energieübertragungsleitschienen (2) und ein Ladeanschlussteil (1) umfasst, das mit einem externen Ladesystem verbunden ist, und ein Ende der elektrischen Energieübertragungsleitschiene (2) mit einem Ende des Ladeanschlusses (1) verbunden ist, wobei die elektrische Energieübertragungsleitschiene (2) eine Ladeschiene ist,
wobei die elektrische Energieübertragungsleitschiene (2) einen elektrischen Energieübertragungskörper (212) und eine Schutzvorrichtung umfasst, wobei die elektrischen Energieübertragungsleitschienen (2) jeweils ein positives Gleichstrom-Energieübertragungssystem (220) und ein negatives Gleichstrom-Energieübertragungssystem (221) sind, Ströme in den beiden elektrischen Energieübertragungsleitschienen (2) eine gleiche Größe und entgegengesetzte Richtungen (A) aufweisen, Breitenrichtungen der beiden elektrischen Energieübertragungsleitschienen (2) parallel zueinander verlaufen, um elektromagnetische Störungen an anderen elektrischen Komponenten beim Einschalten der elektrischen Energieübertragungsleitschiene (2) beseitigen;
wobei die elektrische Energieübertragungsleitschiene (2) eine Wärmeableitungsstruktur umfasst, die Wärmeableitungsstruktur in der Lage ist, den elektrischen Energieübertragungskörper (212) zu kühlen, und sich die Wärmeableitungsstruktur zwischen dem elektrischen Energieübertragungskörper (212) und der Schutzvorrichtung befindet, **dadurch gekennzeichnet, dass** die Schutzvorrichtung ein Isolator (213) ist, die Wärmeableitungsstruktur einen luftgekühlten Wärmeableitungskanal (214) umfasst, und sich der luftgekühlte Wärmeableitungskanal (214) zwischen dem elektrischen Energieübertragungskörper (212) und der Schutzvorrichtung befindet; eine Innenfläche der Schutzvorrichtung mit einer Stützstruktur (215) versehen ist, der elektrische Energieübertragungskörper (212) mit der Stützstruktur (215) in Kontakt steht, und der elektrische Energieübertragungskörper (212), die Schutzvorrichtung und die Stützstruktur (215) den luftgekühlten Wärmeableitungskanal (214) einschließen, die Stützstruktur (215) eine Vielzahl von Stützstangen oder Stützblöcken (216) umfasst, die in Umfangs- und in Axialrichtung der elektrischen Energieübertragungsleitschiene (2) eingerichtet sind,
oder der luftgekühlte Wärmeableitungskanal (214) einen umfänglichen Kanal (217) und einen axialen Kanal (218) umfasst, die miteinander in Verbindung stehen.

2. Elektrisches Energieübertragungssystem nach Anspruch 1, wobei die elektrische Energieübertragungsleitschiene (2) in einem Raum-Rechtwinkel-Koordinatensystem mit X-, Y- und Z-Achse als Koordinatenachsen einen Biegeteilabschnitt (205) in Z-Richtung und/oder biege Teilabschnitt (206) in XY-Richtung umfasst; oder
die elektrische Energieübertragungsleitschiene (2) mindestens einen spiralförmigen Abschnitt (203) umfasst, wobei eine Spiralsteigung (204) des spiralförmigen Abschnitts (203) bevorzugt größer oder gleich 8 mm ist.

3. Elektrisches Energieübertragungssystem nach Anspruch 1, wobei die elektrische Energieübertragungsleitschiene (2) einen flachen, streifenförmigen elektrischen Energieübertragungskörper (212) umfasst, der aus einem Material hergestellt ist, das eines oder mehrere enthält, ausgewählt aus der Gruppe, die aus Aluminium, Phosphor, Zinn, Kupfer, Eisen, Mangan, Chrom, Titan und Lithium besteht

4. Elektrisches Energieübertragungssystem nach Anspruch 3, wobei das Material des elektrischen Energieübertragungskörpers (212) Aluminium enthält; oder
die Zugfestigkeit des elektrischen Energieübertragungskörpers (212) 30 MPa bis 230 MPa beträgt, wobei die Zugfestigkeit des elektrischen Energieübertragungskörpers (212) bevorzugt 40 MPa bis 170 MPa beträgt; oder
eine Bruchdehnung des elektrischen Energieübertragungskörpers (212) 2 % bis 60 % beträgt; oder
eine Härte des elektrischen Energieübertragungskörpers (212) 8 HV bis 105 HV beträgt, wobei die Härte des elektrischen Energieübertragungskörpers (212) bevorzugt 10 HV bis 55 HV beträgt; oder
eine Korngröße des elektrischen Energieübertragungskörpers (212) 5 µm bis 200 µm beträgt.

5. Elektrisches Energieübertragungssystem nach Anspruch 1, wobei das andere Ende der elektrischen Energieübertragungsleitschiene (2) mit einer Fahrzeugstromversorgungseinheit verbunden ist; und
die elektrische Energieübertragungsleitschiene (2) mit einem Anschlussbereich (207) versehen ist.

6. Elektrisches Energieübertragungssystem nach Anspruch 5, wobei das elektrische Energieübertragungssystem für ein Fahrzeug weiter eine Übergangsschicht elektrischer Energie (209) umfasst, die als ein Übergangsmetall zwischen dem Verbindungsbereich (207) und einer Elektrode der Fahrzeugbatterie dient, wobei die Übergangsschicht elektrischer Energie (209) mit dem Verbindungsbereich (207) gestapelt und verbunden ist, die Übergangsschicht elektrischer Energie (209) eines oder mehrere enthält oder ist, ausgewählt aus einer Gruppe, die aus Cadmium, Mangan, Zirkonium, Kobalt, Titan, Chrom, Gold, Silber, Zinn-Blei-Legierung, Silber-Antimon-Legierung, Palladium, Palladium-Nickel-Legierung, Graphit-Silber, Graphen-Silber, Hartsilber und Silber-Gold-Zirkonium-Legierung besteht; wobei bevorzugt
der Verbindungsbereich (207) mit einer ersten Verbindungdurchgangsbohrung (208) versehen ist, die Übergangsschicht elektrischer Energie (209) mit einer zweiten Verbindungsdurchgangsbohrung (210) versehen ist, die axial mit der ersten Verbindungsdurchgangsbohrung (208) zusammenfällt; wobei bevorzugt
ein Übergangsverbindungsring (211) in der ersten Verbindungsdurchgangsbohrung (208) und der zweiten Verbindungsdurchgangsbohrung (210) hülsenartig eingerichtet ist oder der Übergangsverbindungsring (211) mit der ersten Verbindungsdurchgangsbohrung (208) und der zweiten Verbindungsdurchgangsbohrung (210) pressgepasst eingerichtet ist.

7. Elektrisches Energieübertragungssystem nach Anspruch 5, wobei eine abgeschiedene Metallschicht auf einer Verbindungsfläche des Verbindungsbereichs (207) eingerichtet ist; wobei bevorzugt
die abgeschiedene Metallschicht aus einem Material hergestellt ist, das eines oder mehrere enthält, ausgewählt aus der Gruppe bestehend aus Nickel, Cadmium, Mangan, Zirkonium, Kobalt, Zinn, Titan, Chrom, Gold, Silber, Zink, Zinn-Blei-Legierung, Silber-Antimon-Legierung, Palladium, Palladium-Nickel-Legierung, Graphit-Silber, Graphen-Silber, Hartsilber und Silber-Gold-Zirkonium-Legierung; oder das Material der abgeschiedenen Metallschicht das gleiche wie das einer Elektrode ist, die mit dem Verbindungsbereich (207) in Überlappungsverbindung steht; oder eine Dicke der abgeschiedenen Metallschicht 1 µm bis 5000 µm beträgt.

8. Elektrisches Energieübertragungssystem nach Anspruch 1, wobei die elektrischen Energieübertragungskörper (212) der beiden elektrischen Energieübertragungsleitschienen (2) spiegelbildlich zueinander sind; oder ein Überlappungsgrad der elektrischen Energieübertragungskörper (212) der beiden elektrischen Energieübertragungsleitschienen (2) in einer Stapelrichtung 40 % bis 100 % beträgt.

9. Elektrisches Energieübertragungssystem nach Anspruch 1, wobei eine Spalt zwischen dem elektrischen Energieübertragungskörper (212) und der Schutzvorrichtung kleiner oder gleich 1 cm ist; oder die Schutzvorrichtung eine schützende Kunststoffschale ist; oder die Schutzvorrichtung eine Abschirmfunktion aufweist und eine Transferimpedanz der Schutzvorrichtung weniger als 100 mΩ beträgt.

10. Elektrisches Energieübertragungssystem nach Anspruch 5, wobei das elektrische Energieübertragungssystem für ein Fahrzeug weiter einen Temperatursensor (4) umfasst, wobei der Termperatursensor (4) auf dem Anschlussbereich (207) eingerichtet ist oder innerhalb eines Bereichs mit einem Radius von höchstens 9 cm um den Anschlussbereich (207) eingerichtet ist und der Temperatursensor (4) dazu konfiguriert ist, eine Temperatur der elektrischen Energieübertragungsleitschiene (2) zu messen.

11. Ladeeinrichtung, die das elektrische Energieübertragungssystem nach einem der Ansprüche 1 bis 10 umfasst, wobei das Ladeanschlussteil (1) ein Ladestecker oder eine Ladebuchse ist.

12. Elektrofahrzeug, das das elektrische Energieübertragungssystem nach einem der Ansprüche 1 bis 10 umfasst, wobei das Ladeanschlussteil (1) ein Ladestecker oder eine Ladebuchse ist.

## Revendications

1. Système de transmission d'énergie électrique pour un véhicule, dans lequel le système de transmission d'énergie électrique pour un véhicule comprend au moins deux rails de guidage de transmission d'énergie électrique (2) empilés l'un sur l'autre et une partie de connexion de charge (1) qui est connectée à un système de charge externe, et une extrémité du rail de guidage de transmission d'énergie électrique (2) est connectée à une extrémité de la partie de connexion de charge (1), dans lequel le rail de guidage de transmission d'énergie électrique (2) est un rail de charge,
dans lequel le rail de guidage de transmission d'énergie électrique (2) comprend un corps de transmission d'énergie électrique (212) et un dispositif de protection, dans lequel les rails de guidage de transmission d'énergie électrique (2) sont respectivement un système de transmission d'énergie électrique CC positif (220) et un système de transmission d'énergie électrique CC négatif (221), les courants dans les deux rails de guidage de transmission d'énergie électrique (2) présentent la même grandeur et des directions opposées (A), des directions de largeur des deux rails de guidage de transmission d'énergie électrique (2) sont parallèles l'une à l'autre, afin d'éliminer les interférences électromagnétiques avec d'autres composants électriques lorsque le rail de guidage de transmission d'énergie électrique (2) est mis sous tension ;
dans lequel le rail de guidage de transmission d'énergie électrique (2) comprend une structure de dissipation thermique, la structure de dissipation thermique est capable de refroidir le corps de transmission d'énergie électrique (212), et la structure de dissipation thermique est située entre le corps de transmission d'énergie électrique (212) et le dispositif de protection, **caractérisé en ce que** le dispositif de protection est un isolant (213), la structure de dissipation thermique comprend un canal de dissipation thermique à refroidissement à l'air (214), et le canal de dissipation thermique à refroidissement à l'air (214) est situé entre le corps de transmission d'énergie électrique (212) et le dispositif de protection ; une surface intérieure du dispositif de protection est munie d'une structure de support (215), le corps de transmission d'énergie électrique (212) est en contact avec la structure de support (215), et le corps de transmission d'énergie électrique (212), le dispositif de protection et la structure de support (215) entourent le canal de dissipation thermique à refroidissement à l'air (214) ; la structure de support (215) comprend une pluralité de barres ou blocs de support (216) agencés dans des directions circonférentielle et axiale du rail de guidage de transmission d'énergie électrique (2),
ou le canal de dissipation thermique à refroidissement à l'air (214) comprend un canal circonférentiel (217) et un canal axial (218) qui communiquent entre eux.

2. Système de transmission d'énergie électrique selon la revendication 1, dans lequel, dans un système de coordonnées rectangulaires spatiales avec les axes X, Y et Z comme axes de coordonnées, le rail de guidage de transmission d'énergie électrique (2) comprend une section de flexion dans la direction Z (205) et/ou une section de flexion dans la direction XY (206) ; ou
le rail de guidage de transmission d'énergie électrique (2) comprend au moins une partie hélicoïdale (203), de préférence dans lequel un pas d'hélice (204) de la partie hélicoïdale (203) est supérieur ou égal à 8 mm.

3. Système de transmission d'énergie électrique selon la revendication 1, dans lequel le rail de guidage de transmission d'énergie électrique (2) comprend un corps de transmission d'énergie électrique plat en forme de bande (212) qui est composé d'un matériau contenant un ou plusieurs éléments choisis parmi le groupe constitué d'aluminium, phosphore, étain, cuivre, fer, manganèse, chrome, titane et lithium.

4. Système de transmission d'énergie électrique selon la revendication 3, dans lequel le matériau du corps de transmission d'énergie électrique (212) contient de l'aluminium ; ou
la résistance à la traction du corps de transmission d'énergie électrique (212) est de 30 MPa à 230 MPa, de préférence dans lequel la résistance à la traction du corps de transmission d'énergie électrique (212) est de 40 MPa à 170 MPa ; ou
un allongement à la rupture du corps de transmission d'énergie électrique (212) est 2 % à 60 % ; ou
une dureté du corps de transmission d'énergie électrique (212) est de 8 HV à 105 HV, de préférence dans lequel la dureté du corps de transmission d'énergie électrique (212) est de 10 HV à 55 HV ; ou
une taille de grain du corps de transmission d'énergie électrique (212) est de 5 µm à 200 µm.

5. Système de transmission d'énergie électrique selon la revendication 1, dans lequel l'autre extrémité du rail de guidage de transmission d'énergie électrique (2) est connectée à une unité d'alimentation en énergie de véhicule ; et
le rail de guidage de transmission d'énergie électrique (2) est muni d'une zone de connexion (207).

6. Système de transmission d'énergie électrique selon la revendication 5, dans lequel le système de transmission d'énergie électrique pour véhicule comprend en outre une couche de transit d'énergie électrique (209) servant de métal de transition entre la zone de connexion (207) et une électrode de la batterie du véhicule, dans lequel la couche de transit d'énergie électrique (209) est empilée sur et connectée à la zone de connexion (207), la couche de transit d'énergie électrique (209) contient ou est constituée d'un ou plusieurs éléments choisis parmi le groupe constitué de cadmium, manganèse, zirconium, cobalt, titane, chrome, or, argent, zinc, alliage étain-plomb, alliage argent-antimoine, palladium, alliage palladium-nickel, graphite-argent, graphène-argent, argent dur et alliage argent-or-zirconium ; de préférence dans lequel
la zone de connexion (207) est munie d'un premier trou traversant de connexion (208), la couche de transit d'énergie électrique (209) est munie d'un second trou traversant de connexion (210) qui coïncide axialement avec le premier trou traversant de connexion (208) ; de préférence dans lequel
une bague de connexion de transition (211) est agencée dans le premier trou traversant de connexion (208) et le second trou traversant de connexion (210) par emmanchement, et la bague de connexion de transition (211) est en ajustement serré ou est fixée au premier trou traversant de connexion (208) et au second trou traversant de connexion (210).

7. Système de transmission d'énergie électrique selon la revendication 5, dans lequel une couche métallique déposée est agencée sur une surface de connexion de la zone de connexion (207) ; de préférence dans lequel
la couche métallique déposée est composée d'un matériau contenant un ou plusieurs éléments choisis parmi le groupe constitué de nickel, cadmium, manganèse, zirconium, cobalt, étain, titane, chrome, or, argent, zinc, alliage étain-plomb, alliage argent-antimoine, palladium, alliage palladium-nickel, graphite-argent, graphène-argent, argent dur et alliage argent-or-zirconium ; ou le matériau de la couche métallique déposée est le même que celui d'une électrode qui est en jonction par chevauchement avec la zone de connexion (207) ; ou une épaisseur de la couche métallique déposée est de 1 µm à 5000 µm.

8. Système de transmission d'énergie électrique selon la revendication 1, dans lequel les corps de transmission d'énergie électrique (212) des deux rails de guidage de transmission d'énergie électrique (2) sont symétriques ; ou un degré de chevauchement des corps de transmission d'énergie électrique (212) des deux rails de guidage de transmission d'énergie électrique (2) dans une direction d'empilement est de 40 % à 100%.

9. Système de transmission d'énergie électrique selon la revendication 1, dans lequel un espace entre le corps de transmission d'énergie électrique (212) et le dispositif de protection est inférieur ou égal à 1 cm ; ou le dispositif de protection est une coque de protection en plastique ; ou le dispositif de protection présente une fonction de blindage, et une impédance de transfert du dispositif de protection est inférieure à 100 mΩ.

10. Système de transmission d'énergie électrique selon la revendication 5, dans lequel le système de transmission d'énergie électrique pour un véhicule comprend en outre un capteur de température (4), le capteur de température (4) est agencé sur la zone de connexion (207) ou agencé dans une plage d'un rayon ne dépassant pas 9 cm autour de la zone de connexion (207), et le capteur de température (4) est configuré pour mesurer la température du rail de guidage de transmission d'énergie électrique (2).

11. Appareil de charge comprenant le système de transmission d'énergie électrique selon l'une quelconque des revendications 1 à 10, et la partie de connexion de charge (1) est une fiche de charge ou une prise de charge.

12. Véhicule électrique comprenant le système de transmission d'énergie électrique selon l'une quelconque des revendications 1 à 10, et la partie de connexion de charge (1) est une fiche de charge ou une prise de charge.
